# FASCICULE DE BREVET EUROPEEN

(11) **EP 1 852 632 B1**
(45) Date de publication et mention de la délivrance du brevet: **03.10.2012**
(21) Numéro de dépôt: 07107038.7
(22) Date de dépôt: 26.04.2007
(51) Int. Cl.: F16F 15/129

(54) **Embrayage à friction perferctionné, en particulier pour véhicule automobile, rondelle de guidage d'amortisseur d'embrayage à friction, et procédé de montage d'un embrayage à friction**
Perfektionierte Friktionskupplung, speziell für Kraftfahrzeuge, Führungsscheibe für eine gedämpfte Friktionskupplung und Verfahren zur Montage einer Friktionskupplung
Improved friction clutch, in particular for an automobile, drive washer for a damped friction clutch, and method of assembling a friction clutch

(30) Priorité: 03.05.2006 FR 0651581
(43) Date de publication de la demande: 07.11.2007
(73) Titulaire: Valeo Embrayages, 80009 Amiens (FR)
(72) Inventeur: Poirier, Gaël, 80800 Sailly-le-Sec (FR)
(74) Mandataire: Jeuland, Mickaël

(56) Documents cités:
- WO-A-96/10141
- DE-A1- 3 412 908
- FR-A1- 2 365 728
- FR-A1- 2 524 097

## Description

La présente invention concerne un embrayage à friction perfectionné, en particulier pour véhicule automobile et un procédé de montage d'un embrayage à friction.

Un embrayage à friction pour véhicule automobile comprend généralement un dispositif à friction destiné à transmettre un couple entre un volant moteur solidaire en rotation d'un arbre menant, habituellement formé par un vilebrequin de moteur à combustion interne, et un arbre mené, habituellement formé par un arbre d'entrée de boîte de vitesses.

On connaît déjà, dans l'état de la technique, notamment par la demande de brevet publiée sous le numéro WO 96/10141, un embrayage à friction, en particulier pour véhicule automobile, du type comprenant un amortisseur muni d'au moins une rondelle de guidage, destinée à osciller en rotation autour d'un axe géométrique, et des moyens d'amortissement de ces oscillations, comportant au moins une première rondelle élastique de compression axiale en appui axial sur la rondelle de guidage.

L'amortisseur comporte habituellement un voile en oscillation relative avec la rondelle de guidage autour de l'axe géométrique, les moyens d'amortissement étant agencés entre le voile et la rondelle de guidage.

L'amortisseur est couplé en série entre un élément rotatif d'entrée, tel qu'un disque de friction, et un élément rotatif de sortie, tel qu'un moyeu interne. Le disque de friction est destiné à être serré entre le volant moteur et un plateau de pression actionné par des moyens embrayeurs. Le moyeu interne est solidaire en rotation de l'arbre mené.

Les moyens d'amortissement sont destinés à lisser des irrégularités du couple transmis et à filtrer des vibrations générées par le moteur à combustion interne. En effet, les moyens d'amortissement comportent des organes élastiques reliant élastiquement la rondelle de guidage et le voile, et des moyens de frottement destinés à dissiper l'énergie accumulée dans les organes élastiques.

Les moyens de frottement comportent notamment la première rondelle élastique de compression axiale, celle-ci étant destinée à solliciter une paire de surfaces de frottement complémentaires. Habituellement, la première rondelle élastique a une forme générale tronconique s'aplatissant lors de sa compression.

Au cours du montage de l'embrayage, divers organes tels que la rondelle de guidage et la première rondelle élastique sont empilés pour former l'embrayage. Cet empilement doit être manipulé avec précaution tant que l'ensemble des organes de cet empilement n'est pas maintenu axialement.

L'invention a notamment pour but de simplifier le montage d'un embrayage à friction.

A cet effet, l'invention a pour objet un embrayage à friction tel que définie par les revendications 1 et 3.

Grâce aux moyens de maintien axial, la première rondelle élastique et la rondelle de guidage peuvent être assemblées de façon à former un sous-ensemble cohérent pouvant être facilement manipulé lors du montage sans se désolidariser. Ainsi, il est possible de réduire les précautions de manipulation de ce sous-ensemble au cours du montage de l'embrayage, qui est ainsi simplifié.

De plus, on notera que ce sous-ensemble peut être pré-assemblé, préalablement au montage de l'embrayage, ce qui permet d'économiser une étape lors du montage, et donc de réduire le temps de montage.

Un embrayage à friction selon l'invention peut en outre comporter l'une ou plusieurs des caractéristiques suivantes :
- le crevé est délimité par un chevron ;
- la patte emboîtée dans l'orifice est munie d'une extrémité libre saillante repliée contre la rondelle de guidage ;
- l'orifice est prolongé par un dégagement de logement d'une extrémité libre de la patte emboîtée dans cet orifice ;
- la rondelle de guidage comporte des moyens d'immobilisation en rotation de la première rondelle élastique par rapport à cette rondelle de guidage ;
- les moyens d'immobilisation en rotation comprennent deux butées angulaires opposées portées par la rondelle de guidage, entre lesquelles sont intercalées deux butées angulaires complémentaires portées par la première rondelle élastique, les butées angulaires de la rondelle de guidage étant formées par des évidements et/ou des bossages ménagés dans la rondelle de guidage, et les butées angulaires de la première rondelle élastique étant formées par des pattes coopérant avec les évidements et/ou les bossages ;
- les butées angulaires de la rondelle de guidage sont formées par le crevé ou par l'orifice des moyens de maintien axial. ;
- les moyens d'amortissement comportent une seconde rondelle élastique en appui axial contre la rondelle de guidage, intercalée axialement entre cette rondelle de guidage et la première rondelle élastique.

L'invention à également pour objet un procédé de montage d'un embrayage à friction tel que défini précédemment, caractérisé en ce qu'il comporte une étape d'ovalisation de la première rondelle élastique de façon à permettre l'emboîtement de deux pattes diamétralement opposées dans des orifices ou crevés complémentaires de la rondelle de guidage.

L'invention sera mieux comprise à la lecture de la description qui va suivre, donnée uniquement à titre d'exemple et faite en se référant aux dessins annexés dans lesquels :
- la figure 1 est une vue en perspective d'éléments d'un embrayage à friction selon un premier mode de réalisation de l'invention;
- la figure 2 est une vue de détail de la figure 1 ;
- la figure 3 est une vue selon les flèches III-III en coupe du détail de la figure 2 ;
- la figure 4 est une vue similaire à la figure 2 d'un détail d'éléments d'un embrayage à friction selon un deuxième mode de réalisation de l'invention ;
- les figures 5 à 7 sont des vues similaires à la figure 3 de détails d'éléments d'embrayages à friction respectivement selon des troisième à cinquième modes de réalisation de l'invention ;
- la figure 8 est une vue en perspective de l'embrayage à friction de la figure montrant une rondelle élastique supplémentaire de cet embrayage.

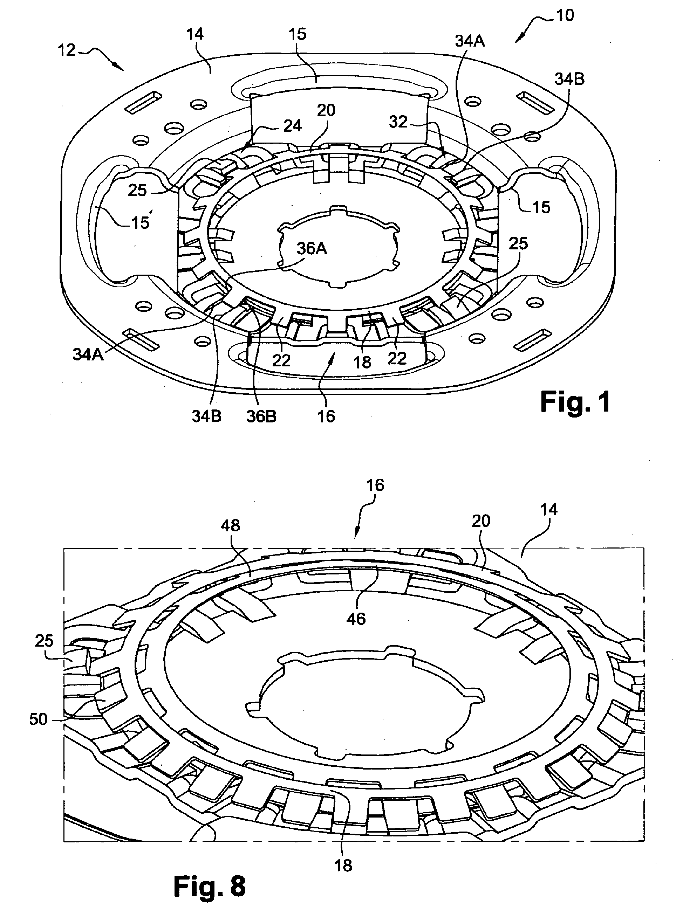

On a représenté sur la figure 1 des éléments d'un embrayage à friction 10 pour un véhicule automobile selon un premier mode de réalisation de l'invention.

L'embrayage 10 comprend un dispositif à friction 12 comprenant un amortisseur muni d'au moins une rondelle de guidage 14 et d'un voile (non représenté) en oscillations rotatives relatives autour d'un axe géométrique commun.

L'amortisseur comporte des moyens d'amortissement des ces oscillations relatives agencés entre le voile et la rondelle de guidage 14, comprenant des organes élastiques classiques à action circonférentielle (non représentés), logés dans des fenêtres 15 de la rondelle de guidage, et reliant élastiquement la rondelle de guidage 14 et le voile. Les moyens d'amortissement comportent également des moyens de frottement 16 destinés à dissiper l'énergie accumulée dans les organes élastiques.

Les moyens de frottement 16 comportent une première rondelle élastique de compression axiale 18, destinée à solliciter une paire de surfaces de frottement complémentaires. Cette rondelle élastique 18, en appui axial contre la rondelle de guidage 14, est sensiblement coaxiale à cette rondelle de guidage 14.

Les surfaces de frottement de la paire de surfaces de frottement complémentaires sont habituellement portées par un organe de frottement annulaire (non représenté), mobile axialement, empilé avec la rondelle de guidage 14 et la rondelle élastique 18.

La rondelle élastique 18 a une forme générale conique. Plus particulièrement, la rondelle élastique 18 comprend une partie annulaire 20 d'appui axial mobile prolongée radialement par des pattes radiales 22 d'appui axial fixe.

La partie annulaire 20 d'appui axial mobile de la rondelle élastique 18 est habituellement destinée à coopérer avec l'organe de frottement. Plus particulièrement, la partie annulaire 20 définit une surface d'appui axial mobile en contact avec cet organe annulaire.

Les pattes radiales 22 d'appui fixe de la rondelle élastique 18 coopèrent avec la rondelle de guidage 14 de l'amortisseur principal.

Afin de pouvoir assembler la rondelle de guidage 14 et la première rondelle élastique 18 en un sous-ensemble cohérent, la rondelle de guidage 14 et la première élastique 18 comportent des moyens complémentaires 24 de maintien axial de la première rondelle élastique 18 sur la rondelle de guidage 14.

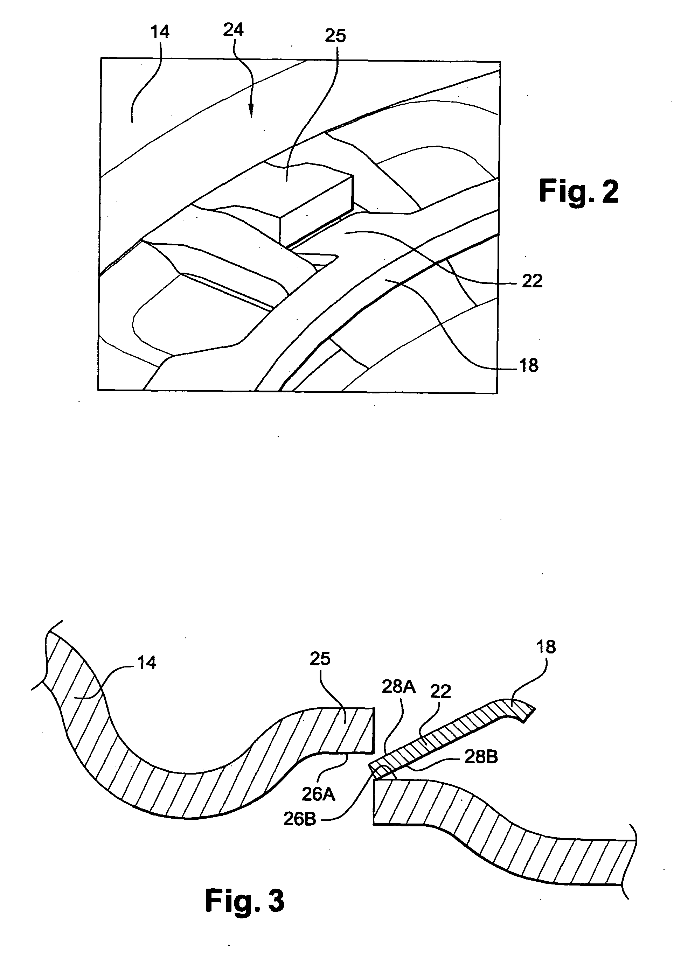

Les moyens de maintien axial 24 sont représentés plus en détail sur les figures 2 et 3.

Conformément au premier mode de réalisation de l'invention, les moyens 24 de maintien axial comprennent deux crevés 25 diamétralement opposés ménagés dans la rondelle de guidage 14. Ces crevés 25 sont généralement réalisés lors de l'emboutissage de la rondelle de guidage 14.

Chaque crevé 25 forme deux butées axiales 26A, 26B opposées, entre lesquelles sont intercalées deux butées axiales complémentaires 28A, 28B portées par la rondelle élastique 18. Ces butées axiales 28A, 28B de la première rondelle élastique 18 sont formées par une patte 22 emboîtée dans le crevé 25.

Ainsi, lors du procédé de montage de l'embrayage on insère deux pattes 22 diamétralement opposées de la première rondelle élastique 18 dans les crevés 25, par exemple en réalisant une étape d'ovalisation de la rondelle élastique 18.

Lorsque les pattes 22 sont emboîtées dans les crevés 25, on forme ainsi un sous-ensemble cohérent comportant la rondelle de guidage 14 et la rondelle élastique 18, ce sous-ensemble étant facile à manipuler lors du montage de l'embrayage 10.

De préférence, la rondelle de guidage comporte des moyens 32 d'immobilisation en rotation de la première rondelle élastique 18 par rapport à cette rondelle de guidage 14. En effet, le fonctionnement de l'embrayage à section nécessite souvent que la rondelle de guidage 14 et la rondelle élastique 18 soient solidaires en rotation.

Les moyens 32 d'immobilisation en rotation comportent par exemple deux butées angulaires opposées 34A, 34B portées par la rondelle de guidage 14, entre lesquelles sont intercalées deux butées angulaires complémentaires 36A, 36B portées par la première rondelle élastique 18.

Habituellement, les butées angulaires 34A, 34B de la rondelle de guidage 14 sont formées par des bossages, par exemple des crevés, ménagés dans la rondelle de guidage 14, et les butées angulaires 36A, 36B de la première rondelle élastique 18 sont formées par des pattes 22 coopérant avec ces bossages. Les bossages sont généralement réalisés lors de l'emboutissage de la rondelle de guidage 14.

En variante, les butées angulaires de la rondelle de guidage pourraient être formées par des évidements, débouchant ou non.

On notera que, conformément au mode de réalisation représenté, les crevés 25 forment également des butées angulaires des moyens d'immobilisation en rotation, coopérant avec les pattes 22 emboîtées dans ces crevés 25.

De préférence, les évidements ou les bossages des moyens d'immobilisation 32 sont ménagés dans la rondelle de guidage à 90° des crevés 25. Ainsi, les pattes 22 correspondantes viennent coopérer avec ces évidements et/ou ces bossages lorsqu'on relâche la rondelle élastique 18 après l'étape d'ovalisation précitée.

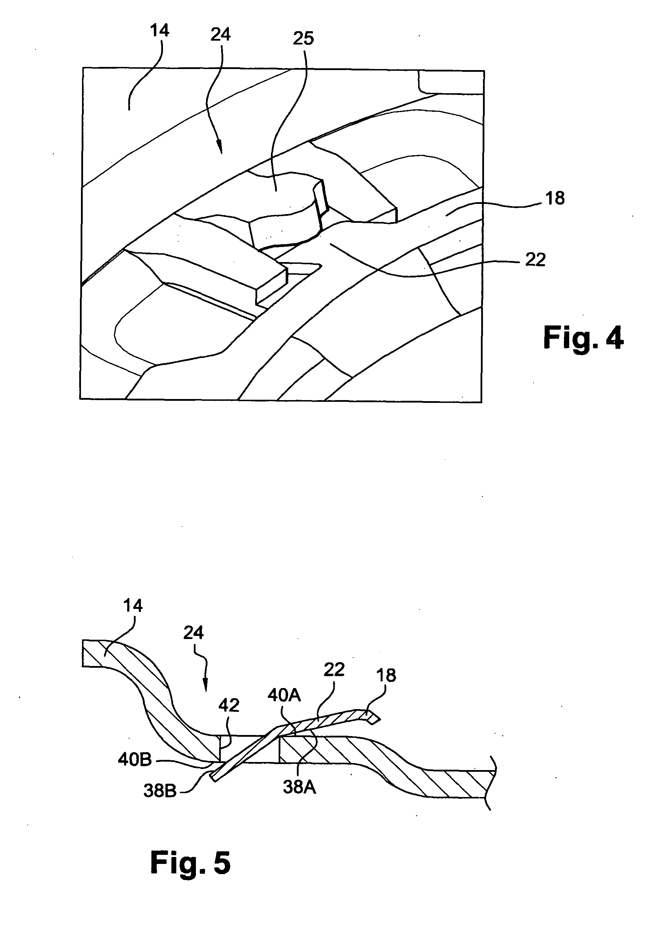

On a représenté sur la figure 4 des moyens de maintien 24 selon un deuxième mode de réalisation de l'invention. Conformément à ce deuxième mode de réalisation, le crevé 25 est délimitée un chevron.

On a représenté sur la figure 5 des moyens de maintien axial 24 selon un troisième mode de réalisation de l'invention.

Conformément au troisième mode de réalisation de l'invention les moyens 24 de maintien axial comprennent deux butées axiales opposées 38A, 38B portées par la rondelle élastique 18, entre lesquelles sont intercalées deux butées axiales complémentaires 40A, 40B portées par la rondelle de guidage 14.

Les butées axiales de la rondelle de guidage sont formées par un orifice 42 ménagé dans la rondelle de guidage 14, et les butées axiales de la première rondelle élastique sont formées par une patte 22 emboîtée dans l'orifice 42.

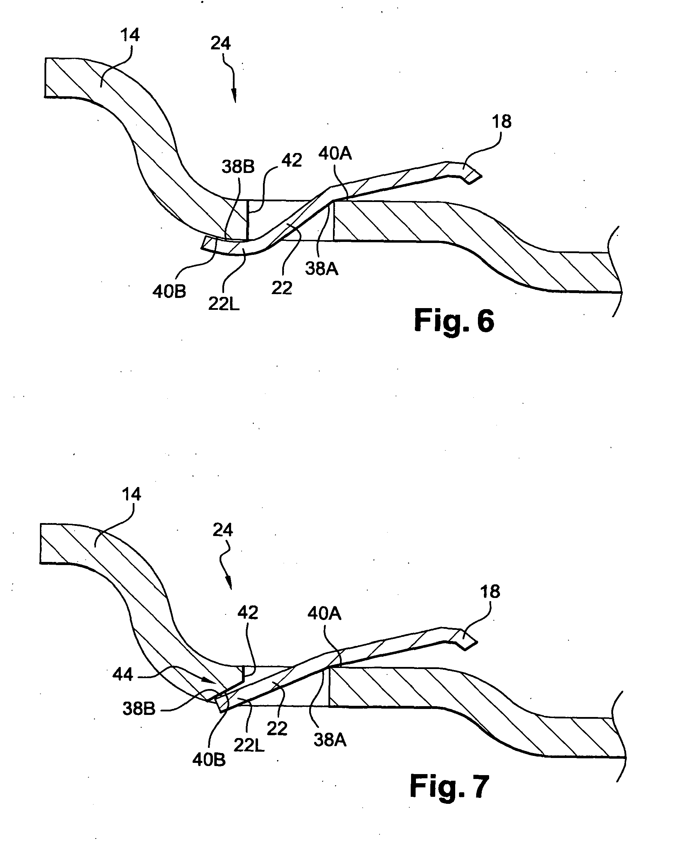

Conformément au quatrième mode de réalisation, représenté sur la figure 6, la patte 22 emboîtée dans l'orifice 42 est munie d'une extrémité libre 22L saillante repliée contre la rondelle de guidage 14 afin de réduire son encombrement.

Conformément au cinquième mode de réalisation, représenté sur la figure 7, l'orifice 42 est prolongé par un dégagement 44 de logement de l'extrémité libre 22L de la patte 22 emboîtée dans l'orifice 42. Ce dégagement de logement 44 permet de réduire l'encombrement axial de l'extrémité libre 22L de la patte emboîtée 22.

On a représenté sur la figure 8 l'embrayage à friction 10 de la figure 1 (premier mode de réalisation de l'invention) muni des moyens de frottement 16 qui comportent, en plus de la rondelle élastique 18, une seconde rondelle élastique 46 intercalée axialement entre la rondelle de guidage 14 et la première rondelle élastique 18. Cette seconde rondelle élastique 46, en appui axial contre la rondelle de guidage 14, est également destinée à solliciter une paire de surface de frottement complémentaire portée par un second organe de frottement annulaire (non représenté).

Cette rondelle annulaire élastique 46 a également une forme générale conique, et comprend une partie annulaire 48 d'appui axial mobile prolongée radialement par des pattes radiales 50 d'appui axial fixe. De préférence, le diamètre moyen de la partie annulaire 20 de la première rondelle élastique 18 est supérieur au diamètre moyen de la partie annulaire 48 de la seconde rondelle élastique 46, de sorte que la surface d'appui axial mobile de la première rondelle élastique 18 entoure la surface d'appui axial mobile de la seconde rondelle élastique 46.

La seconde rondelle élastique 46 est maintenue axialement contre la rondelle de guidage 14 par la première rondelle élastique 18.

On notera que la rondelle de guidage 14 comporte également des moyens d'immobilisation en rotation de cette seconde rondelle élastique 46 par rapport à la rondelle de guidage 14.

On notera que l'invention n'est pas limitée aux modes de réalisation précédemment décrits. En effet, diverses caractéristiques définies ci-dessus dans des modes de réalisation différents pourraient notamment être combinées sans pour autant sortir du cadre de l'invention.

## Revendications

1. Embrayage à friction (10), en particulier pour véhicule automobile, du type comprenant un amortisseur muni d'au moins une rondelle de guidage (14), destinée à osciller en rotation autour d'un axe géométrique, et des moyens d'amortissement de ces oscillations, comportant au moins une première rondelle élastique (18) de compression axiale en appui axial sur la rondelle de guidage (14), **caractérisé en ce que** la rondelle de guidage (14) et la première rondelle élastique (18) comportent des moyens complémentaires (24) de maintien axial de la première rondelle élastique (18) sur la rondelle de guidage (14), ces moyens de maintien axial (24) comprenant au moins deux butées axiales (26A, 26B) opposées portées par la rondelle de guidage (14), entre lesquelles sont intercalées deux butées axiales complémentaires (28A, 28B) portées par la première rondelle élastique (18), les butées axiales (26A, 26B) de la rondelle de guidage (14) étant formées par un crevé (25) ménagé dans la rondelle de guidage (14), et les butées axiales (28A, 28B) de la première rondelle élastique (18) étant formées par une patte (22) emboîtée dans le crevé (25).

2. Embrayage à friction (10) selon la revendication 1, **caractérisé en ce que** le crevé (25) est délimité par un chevron.

3. Embrayage à friction (10), en particulier pour véhicule automobile, du type comprenant un amortisseur muni d'au moins une rondelle de guidage (14), destinée à osciller en rotation autour d'un axe géométrique, et des moyens d'amortissement de ces oscillations, comportant au moins une première rondelle élastique (18) de compression axiale en appui axial sur la rondelle de guidage (14), **caractérisé en ce que** la rondelle de guidage (14) et la première rondelle élastique (18) comportent des moyens complémentaires (24) de maintien axial de la première rondelle élastique (18) sur la rondelle de guidage (14), lesdits moyens (24) de maintien axial comprenant au moins deux butées axiales opposées (38A, 38B) portées par la première rondelle élastique (18), entre lesquelles sont intercalées deux butées axiales complémentaires (40A, 40B) portées par la rondelle de guidage (14), les butées axiales (40A, 40B) de la rondelle de guidage (14) étant formées par un orifice (42) ménagé dans la rondelle de guidage (14), et les butées axiales (38A, 38B) de la première rondelle élastique (18) étant formées par une patte (22) emboîtée dans l'orifice (42).

4. Embrayage à friction (10) selon la revendication 3, **caractérisé en ce que** la patte (22) emboîtée dans l'orifice (42) est munie d'une extrémité libre saillante (22L) repliée contre la rondelle de guidage (14).

5. Embrayage à friction (10) selon la revendication 3, **caractérisé en ce que** l'orifice (42) est prolongé par un dégagement (44) de logement d'une extrémité libre (22L) de la patte (22) emboîtée dans cet orifice (42).

6. Embrayage à friction (10) selon l'une quelconque des revendications 1 à 5, **caractérisé en ce que** la rondelle de guidage (14) comporte des moyens (32) d'immobilisation en rotation de la première rondelle élastique (18) par rapport à cette rondelle de guidage (14).

7. Embrayage à friction (10) selon la revendication 6, **caractérisé en ce que** les moyens (32) d'immobilisation en rotation comprennent deux butées angulaires opposées (34A, 34B) portées par la rondelle de guidage (14), entre lesquelles sont intercalées deux butées angulaires complémentaires (36A, 36B) portées par la première rondelle élastique (18), les butées angulaires (34A, 34B) de la rondelle de guidage (14) étant formées par des évidements et/ou des bossages ménagés dans la rondelle de guidage (14), et les butées angulaires (36A, 36B) de la première rondelle élastique (18) étant formées par des pattes (22) coopérant avec les évidements et/ou les bossages.

8. Embrayage à friction (10) selon la revendication 7, **caractérisé en ce que** les butées angulaires (34A, 34B) de la rondelle de guidage (14) sont formées par le crevé (25) ou par l'orifice (42) des moyens (24) de maintien axial.

9. Embrayage à friction (10) selon l'une quelconque des revendications précédentes, **caractérisé en ce que** les moyens d'amortissement comportent une seconde rondelle élastique (46) en appui axial contre la rondelle de guidage (14), intercalée axialement entre cette rondelle de guidage (14) et la première rondelle élastique (18).

10. Procédé de montage d'un embrayage à friction (10) selon la revendication 1 ou 3, **caractérisé en ce qu'**il comporte une étape d'ovalisation de la première rondelle élastique (18) de façon à permettre l'emboîtement de deux pattes (22) diamétralement opposées dans des orifices (42) ou crevés (25) complémentaires de la rondelle de guidage (14).

## Claims

1. Friction clutch (10), in particular for a motor vehicle, of the type comprising a damper provided with at least one guide ring (14) designed to rotatably oscillate about a geometric axis, and means for damping these oscillations, comprising at least a first resilient ring (18) of axial compression bearing axially on the guide ring (14), **characterised in that** the guide ring (14) and the first resilient ring (18) include complementary means (24) for axially holding the first resilient ring (18) on the guide ring (14), the said axial holding means (24) comprising at least two opposing axial stops (26A, 26B) carried by the guide ring (14), between which are interposed two complementary axial stops (28A, 28B) carried by the first resilient ring (18), the axial stops (26A, 26B) of the guide ring (14) being formed by a parting (25 ) fashioned in the guide ring (14), and the axial stops (28A, 28B) of the first resilient ring (18) being formed by a tab (22) fitted into the parting (25).

2. Friction clutch (10) according to claim 1, **characterised in that** the parting (25) is delimited by a chevron.

3. Friction clutch (10), in particular for a motor vehicle, of the type comprising a damper provided with at least one guide ring (14) designed to rotatably oscillate about a geometric axis, and means for damping these oscillations, comprising at least a first resilient ring (18) of axial compression bearing axially on the guide ring (14), **characterised in that** the guide ring (14) and the first resilient ring (18) include additional means (24) for axially retaining the first resilient ring (18) on the guide ring (14), the said axial retaining means (24) comprising at least two opposite axial stops (38A, 38B) carried by the first resilient ring (18), between which are interposed two complementary axial stops (40A, 40B) carried by the guide ring (14), the axial stops (40A, 40B) of the guide ring (14) being formed by an orifice (42) fashioned in the guide ring (14), and the axial stops (38A, 38B) of the first resilient ring (18) being formed by a tab (22) fitted into the orifice (42).

4. Friction clutch (10) according to claim 3, **characterized in that** the lug (22) fitted in the orifice (42) is provided with a projecting free end (22L) folded against the guide ring (14).

5. Friction clutch (10) according to claim 3, **characterised in that** the orifice (42) is extended by a recess (44) for receiving a free end (22L) of the tab (22) fitted into the said orifice ( 42).

6. Friction clutch (10) according to any one of claims 1 to 5, **characterised in that** the guide ring (14) comprises means (32) for rotationally immobilising the first resilient ring (18) with respect to the said guide ring (14).

7. Friction clutch (10) according to claim 6, **characterised in that** the rotationally immobilising means (32) comprise two opposite angular stops (34A, 34B) carried by the guide ring (14), between which are interposed two complementary angular stops (36A, 36B) carried by the first resilient ring (18), the angular stops (34A, 34B) of the guide ring (14) being formed by recesses and/or bosses fashioned in the guide ring (14), and the angular stops (36A, 36B) of the first resilient ring (18) being formed by lugs (22) cooperating with the recesses and/or bosses.

8. Friction clutch (10) according to claim 7, **characterised in that** the angular stops (34A, 34B) of the guide ring (14) are formed by the parting (25) or by the orifice (42) of the axial retention means (24).

9. Friction clutch (10) according to any one of the preceding claims, **characterised in that** the damping means comprise a second resilient ring (46) bearing axially against the guide ring (14), interposed axially between the said guide ring (14) and the first resilient ring (18).

10. Method for assembling a friction clutch (10) according to claim 1 or 3, **characterised in that** it comprises a step of ovalisation of the first resilient ring (18) so as to allow the insertion of two diametrically opposite lugs (22) into complementary orifices (42) or partings (25) in the guide ring (14).

## Patentansprüche

1. Reibungskupplung (10), insbesondere für Kraftfahrzeuge, umfassend einen Dämpfer mit mindestens einer Führungsscheibe (14), die dazu bestimmt ist, drehend um eine geometrische Achse zu schwingen, und Mittel zur Dämpfung dieser Schwingungen, welche zumindest eine erste elastische Scheibe (18) zur axialen Kompression umfassen, die axial in Anlage auf der Führungsscheibe (14) ist, **dadurch gekennzeichnet, dass** die Führungsscheibe (14) und die erste elastische Scheibe (18) komplementäre Mittel (24) zum axialen Halten der ersten elastischen Scheibe (18) auf der Führungsscheibe (14) aufweisen, wobei diese axialen Haltemittel (24) mindestens zwei gegenüberliegende axiale Anschläge (26A, 26B) umfassen, die von der Führungsscheibe (14) getragen sind und zwischen denen zwei von der ersten elastischen Scheibe (18) getragene komplementäre axiale Anschläge (28A, 28B) eingefügt sind, wobei die axialen Anschläge (26A, 26B) der Führungsscheibe (14) durch einen in die Führungsscheibe (14) eingebrachten Schlitz (25) gebildet sind, und wobei die axialen Anschläge (28A, 28B) der ersten elastischen Scheibe (18) durch eine in den Schlitz (25) eingepasste Lasche (22) gebildet sind.

2. Reibungskupplung (10) nach Anspruch 1, **dadurch gekennzeichnet, dass** die Öffnung (25) durch einen Höcker begrenzt ist.

3. Reibungskupplung (10), insbesondere für Kraftfahrzeuge, umfassend einen Dämpfer mit mindestens einer Führungsscheibe (14), die dazu bestimmt ist, drehend um eine geometrische Achse zu schwingen, und Mittel zur Dämpfung dieser Schwingungen, welche zumindest eine erste elastische Scheibe (18) zur axialen Kompression umfassen, die axial in Anlage auf der Führungsscheibe (14) ist, **dadurch gekennzeichnet, dass** die Führungsscheibe (14) und die erste elastische Scheibe (18) komplementäre Mittel (24) zum axialen Halten der ersten elastischen Scheibe (18) auf der Führungsscheibe (14) aufweisen, wobei die Mittel (24) zum axialen Halten mindestens zwei gegenüberliegende axiale Anschläge (38A, 38B) umfassen, die von der ersten elastischen Scheibe (18) getragen sind und zwischen denen zwei von der Führungsscheibe (14) getragene komplementäre axiale Anschläge (40A, 40B) eingefügt sind, wobei die axialen Anschläge (40A, 40B) der Führungsscheibe (14) durch eine in die Führungsscheibe (14) eingebrachte Öffnung (42) gebildet sind, und wobei die axialen Anschläge (38A, 38B) der ersten elastischen Scheibe (18) durch eine in die Öffnung (42) eingepasste Lasche (22) gebildet sind.

4. Reibungskupplung (10) nach Anspruch 3, **dadurch gekennzeichnet, dass** die in der Öffnung (42) eingepasste Lasche (22) mit einem vorspringenden freien Ende (22L) versehen ist, welches gegen die Führungsscheibe (14) umgebogen ist.

5. Reibungskupplung (10) nach Anspruch 3, **dadurch gekennzeichnet, dass** die Öffnung (42) durch eine Ausnehmung (40) zur Aufnahme eines freien Endes (22L) der in dieser Öffnung (42) eingepassten Lasche (22) verlängert ist.

6. Reibungskupplung (10) nach einem der Ansprüche 1 bis 5, **dadurch gekennzeichnet, dass** die Führungsscheibe (14) Mittel (32) zur rotatorischen Festlegung der ersten elastischen Scheibe (18) relativ zu dieser Führungsscheibe (14) aufweist.

7. Reibungskupplung (10) nach Anspruch 6, **dadurch gekennzeichnet, dass** die rotatorischen Festlegungsmittel (32) zwei gegenüberliegende Winkelanschläge (34A, 34B) umfassen, die von der Führungsscheibe (14) getragen sind und zwischen denen zwei komplementäre von der ersten elastischen Scheibe (18) getragene Winkelanschläge (36A, 36B) eingefügt sind, wobei die Winkelanschläge (34A, 34B) der Führungsscheibe (14) durch in die Führungsscheibe (14) eingebrachte Aussparungen und/oder Buckel gebildet sind, und wobei die Winkelanschläge (36A, 36B) der ersten elastischen Scheibe (18) durch Laschen (22) gebildet sind, die mit den Aussparungen und/oder Buckeln zusammenwirken.

8. Reibungskupplung (10) nach Anspruch 7, **dadurch gekennzeichnet, dass** die Winkelanschläge (34A, 34B) der Führungsscheibe (14) durch den Schlitz (25) oder durch die Öffnung (42) der axialen Haltemittel (24) gebildet sind.

9. Reibungskupplung (10) nach einem der vorangehenden Ansprüche, **dadurch gekennzeichnet, dass** die Dämpfungsmittel eine zweite elastische Scheibe (46) in axialer Anlage gegen die Führungsscheibe (14) umfassen, die axial zwischen die Führungsscheibe (14) und die erste elastische Scheibe (18) eingefügt ist.

10. Verfahren zur Montage einer Reibungskupplung (10) nach einem der Ansprüche 1 oder 3, **dadurch gekennzeichnet, dass** es einen Schritt zum Oval-Machen der ersten elastischen Scheibe (18) umfasst, um die Einpassung von zwei diametral gegenüberliegenden Laschen (22) in komplementäre Öffnungen (42) oder Schlitze (25) der Führungsscheibe (14) zu erlauben.
